# EUROPEAN PATENT SPECIFICATION

(11) **EP 1 627 502 B1**
(45) Date of publication and mention of the grant of the patent: **06.06.2007**
(21) Application number: 04729949.0
(22) Date of filing: 28.04.2004
(51) Int. Cl.: H04L 12/56, H04L 29/06

(54) **METHOD AND A TRANSCEIVER DEVICE FOR TRANSMITTING MEDIA DATA VIA A NETWORK**
VERFAHREN UND TRANSCEIVER FÜR DIE ÜBERTRAGUNG VON MEDIENDATEN ÜBER EIN NETZWERK
DISPOSITIF EMETTEUR-RECEPTEUR PERMETTANT DE TRANSMETTRE DES DONNEES MEDIA A TRAVERS UN RESEAU ET SON PROCEDE

(30) Priority: 26.05.2003 EP 03405379
(43) Date of publication of application: 22.02.2006
(73) Proprietor: International Business Machines Corporation, Armonk, NY 10504 (US)
(72) Inventor: VAN HERREWEGHEN, Elsie, CH-8810 Horgen (CH); ROONEY, John, G., CH-8003 Zurich (CH)
(74) Representative: Klett, Peter Michael
(86) International application number: PCT/IB2004/001511
(87) International publication number: WO 2004/105327

(56) References cited:
- US-A1- 2002 114 332
- US-A1- 2002 116 715
- ERIC WEISS: "Security Concerns with VOIP"[Online] 2 August 2001 (2001-08-02), pages 1-7, XP002291850 Retrieved from the Internet: URL:http://www.sans.org/rr/papers/64/323.p df>

## Description

The present invention is related to a method for transmitting media data via a network, particularly for transmitting voice data. The present invention is further related to a transceiver device for sending and receiving media data via a network.

To prevent denial of service attacks in radio communication, frequency hopping techniques are commonly used. These are well-known, and therefore there have recently occurred attempt to apply similar techniques in packet forwarding networks such as the Internet. The so-called "path hopping techniques" involve using several different data paths for transmitting a given data stream having a number of data packets and alternating over time between the different data paths so that an attacker must know and have access to all of the data paths in order to entirely prevent communication.

Path hopping is most appropriate when applied to continuous media streams, e.g. a voice stream since these are typically tolerant of some loss. This means that a meaningful communication can still take place even if a certain percentage of the packets is intercepted by the attacker. However, continuous media streams are intolerant to delay and jitter. As different paths have different propagation delays, path hopping increases both the delay and the jitter in the continuous media stream.

US 2002/114332 A1 discloses a method for communicating information from a sender to a receiver through a network having a first path and a second path comprising receiving an information stream, generating at least a first stream and a second stream in response to the information stream, sending the first stream through the first path and sending the second stream through the second path.

Therefore it is an object of the present invention to provide a method for transmitting media data and in which a denial of service is prevented. Furthermore, it is an object of the present invention that the method of transmitting the media is tolerant to delay and jitter of the continuous media stream while changing the data path the media stream is being transmitted over.

It is a further object to provide a transceiver device for transmitting media data via network, thereby preventing a denial of service and avoiding undesired effects caused by delay and jitter in the continuous media stream.

These and other objects are accomplished by the method for transmitting media data according to claim 1, by the emitter device according to claim 8 and by the transceiver device according to claim 13.

Further preferred embodiments of the present invention are given in the dependent claims.

According to a first aspect of the present invention, there is provided a method for transmitting media data, especially voice data, via a network, wherein the media data are converted to a media data packet stream, the network having a number of data paths including a first and a second data path each capable of transmitting data packets of the media data packet stream, the method comprising the step of transmitting the media data packet stream via the first data path, the method characterised in that it further comprises the steps of: analysing the media data packet stream to detect an information pause, and in response to the detected information pause stopping the media data packet stream transmitted via the first data path and continuing the transmission of the media data packet stream via the second data path.

voice communication has natural pauses, which means that a person speaks less than 40% of the time in a normal conversation. Voice is modelled as two Poisson processes, which represent the probability of speech of going to silence and silence going to speech. The long history of voice communication means that these processes are well understood. Continuous speech takes 0.4 to 1.2 seconds, while silence typically takes 0.6 to 1.8 seconds.

Media data are normally transferred as media data packets in a stream, when the media data is to be transmitted via a data path of a network. In order to transfer the media data in the media data packet stream a codec is normally used. A codec is a device capable of taking an analog media signal and producing a digital stream and vice versa. Packet codecs produce the digital stream in the form of IP packets. Codecs which generate a packet stream from a voice signal, typically recognize silence and stop producing packets.

The present invention now provides a method to overcome the lack of safety of the network using a path hopping technique. For a given media stream which is to be transferred, a number of data paths are provided. Only one of the data paths carries the media data packet stream at a given time. According to the path hopping technique, the data path carrying the media data packet stream may change. The changing of the data path is dependent on the detection of information pauses in the media data. This can be achieved e.g. by looking at the time stamps of the media data packets in the data stream. If an information pause in the data packet stream is recognized, the data path that the data packets are transported over is modified. As usually, the information pauses in voice communication are much longer than the typical propagation delay of one of the data paths and no additional delay or jitter is introduced to the media stream by the method of the present invention.

An attacker controlling part of the network can prevent the arrival of part of the data stream. However, unless it controls the entire network, it cannot prevent transfer of the whole data stream.

Preferably, the pause in the media data is detected if no information or no significant information is contained in the media data for a specific time period. A codec normally stops producing data packets for the time period in which no information or no significant information is detected.

Optionally, data packets including no information (i.e. silence) may be produced. Thereby, an information pause can be recognized.

Preferably, a filler data packet stream is generated by a filler data generator located in the emitter controller. The filler data packet stream is transferred via the second data path when the media data packet stream is transferred via the first data path and which is transferred via the first data path when the media data packet stream is transferred via the second data path. The filler data packets make it difficult for an attacker to find out if the transferred data packet stream is a filler data packet stream containing no relevant information or is the media data packet stream containing the media data to be transmitted.

Preferably, the filler data packet stream contains path information wherein the path information indicates on which of the first and second data paths the media data packet stream is currently being transmitted. Consequently, a receiver device receiving the filler data packet stream and the media data packet stream can find out on which data path the media data packet stream is currently being transmitted over by analysing the data packet of one of the data paths. If on the data path analysed the media data packet stream is transmitted, it can be recognized by the receiver device. If filler data packets are transferred, the receiver device can recognize on which data path the media data packet is currently being transferred.

Preferably, the filler data packets have the same size or almost the same size as the media data packets and are transmitted with the same data rate as the media data packets to give an attacker no indication on the data path the media data packet stream is transmitted over.

In a further preferred embodiment, the media data packet and/or the filler data packets are encrypted before being transmitted via the respective first or second data path. The encryption increases the protection against a surveillance of a part of the media data. If one or more of the media data packets or of the filler data packet cannot be received, it is assumed that the media data packets and/or the filler data packets are intercepted or blocked and the respective unsafe data path for which the interception or blocking is detected is eliminated from the number of data paths of the network.

According to another aspect of the present invention, there is provided an emitter device for transmitting provided media data, especially voice data, via a connected network, said network having a number of data paths each capable of carrying data packets of a data packet stream, the emitter device comprising: a converter means for splitting the provided media data into media data packets in a media data packet stream; a transmitting means for sending the media data packet stream via one of the data paths; a controller for choosing one of the data paths for sending the media data packet stream, characterised in that, the emitter device further comprises a pause detector to recognize an information pause in the media data, wherein the controller is operable to switch the sending of the media data packet stream to another data path when an information pause is detected.

The emitter device of the present invention, thereby, provides a path hopping method for transmitting media data via a connected network. As the path hopping method for transmitting media data, particularly voice data, usually has the disadvantages of delay and jitter when the respective data path the media data is transmitted over is changed, the switching from the respective data path to another suitable data path is controlled and performed only when the information pause in the media data is recognized. Particularly, in voice data, pauses occur quite frequently, as mentioned above. As the information pauses in the voice data are normally much longer than the jitter or the delay when changing the data path for transmission, the normal delay and jitter can be covered.

Preferably, the emitter device includes a filler data generator in order to generate one or more filler data packets including a path information indicating on which of the data paths the media data packet stream is currently being transmitted. The transmitting means is operable to transmit one or more filler data packets in one or more data paths which are different from the one data path the media data packet stream is transmitted over. This embodiment allows a faster detection as to which of the data paths the transfer of the media data packet stream has changed, particularly when filler data packets are transmitted on all of the data paths apart from the data paths carrying the media data packet stream. Thus, if after receiving the last media data packet on a data path before changing the respective data path a filler data packet is received, it can immediately be determined on which data path the following media data packet can be received.

Especially when the filler data packets have the same size and/or the same data rate as the media data packet stream, the detection of the media data packet stream is difficult without analysing the data packets. Therefore, the path information given in the filler data packets provides a simple and fast possibility to detect on which data paths the media data packet stream is currently being transmitted.

If the transmission of the media data packets and/or of the filler data packets via a respective data path is intercepted or blocked, the respective data path is preferably eliminated from the number of data paths by the controller. If an interception or blocking of data packets is recognized, the respective data path is unsafe and most likely subject to an attack. By eliminating the respective data path from the data paths used for transmission of the media data, a further interception can be avoided.

According to another aspect of the invention, the emitter may make use of information about the propagation delay across the data paths to the receiver when deciding which new path to select. For example, it may choose the alternative paths whose propagation delay is closest to that of the path on which data is currently being transmitted to switch to, thus reducing the jitter.

According to another preferred embodiment of the present invention, a transceiver device having an emitter device as described above is provided. Such a transceiver device allows to build up a network wherein between at least two of such transceiver devices by bidirectional data paths can be established.

For a better understanding of the present invention, together with other and further features and advantages thereof, reference is made to the following description taken in conjunction with the accompanying drawing and the scope of the invention that will be pointed out in the appended claims.

The only Figure shows a simplified network having a first transceiver device 1 and a second transceiver device 2. The first transceiver device 1 includes a first emitter device 3 and a first receiver device 4 and the second transceiver device includes a second emitter device 5 and a second receiver device 6. The first and the second transceiver device 1, 2 are connected via a network 7. The emitter device 3, 5 and the receiver device 4, 6 are typically implemented as one with two distinct functions emission and reception in a common transceiver device 1, 2. In order to allow the transceiver device 1, 2 to handle the fast continuous media streams, the preferred implementation is in a network processor.

In order to allow multiple data paths over the public Internet, an overlay network is used. An overlay network is a network in which IP is encapsulated in IP, which means that the normal IP header is not used to forward the packet across the network, but is encapsulated in another IP packet. The encapsulation can be performed in an encrypted form. The encapsulated IP packet is used to forward the data packet between overlay network nodes 8, capable of adding and removing the encapsulation. This is called on IP tunnel. By having multiple overlay network nodes 8 scattered across the Internet, each interconnected with IP tunnels, an overlay network is created.

The first and second emitter devices 3, 5 each include an emitting converting means capable of splitting a continuous media stream MS over multiple data paths using logic deduced from the media stream. The first and the second receiver devices 4, 6 each include a receiving converter means 10 capable of recombining multiple sets of media data packets in order to recreate the transmitted media stream.

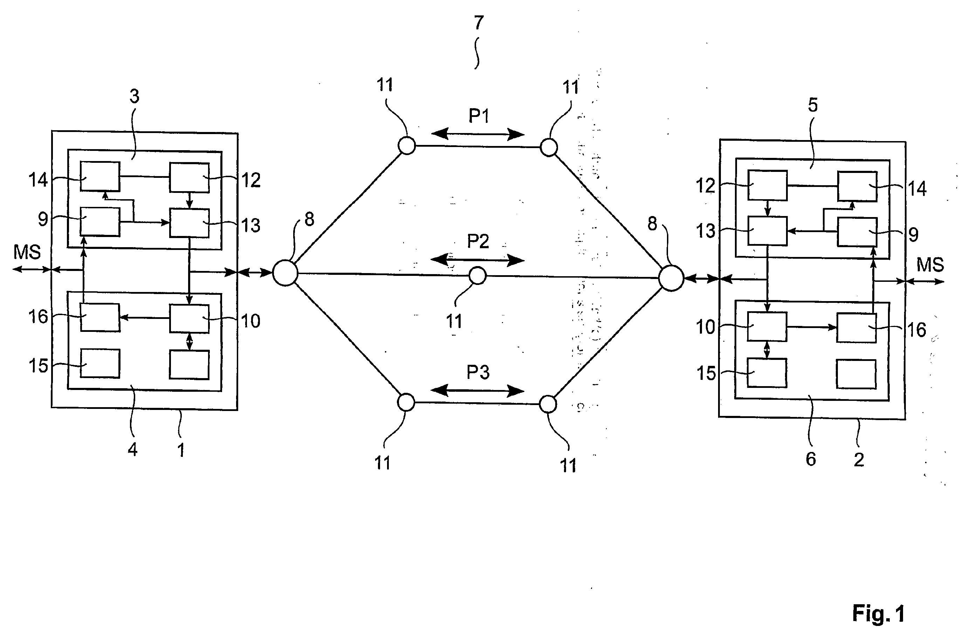

In the embodiment of Figure 1, voice data is provided as a media stream to the first transceiver device 1. The voice data is to be transmitted to the second transceiver device 2 across the overlay network 7 using the different data paths P1, P2, P3. Each of the data paths P1, P2, P3 includes one or more sub-nodes 11, through which the data packets are forwarded. The possible data paths P1, P2, P3 are known to the first and the second emitter device 3, 5, either being learnt through a dedicated configuration process or manually installed by an operator.

The path information is provided by an emitter controller 12 which provides a path information indicating on what data path P1, P2, P3 the media data packet stream should be transmitted. The emitter devices 3, 5 each include an emitter converter means 9 wherein the voice stream is received and split into media data packets provided to a transmitting means 13. The emitter converter means provides each of the generated media data packets with a time stamp indicating the order and the timely reference of the media data packet.

The media data packet stream is also received by a pause detector 14 which is capable of recognizing information pauses in the media stream, e.g. by looking at the time stamps of the media data packets. In order to detect an information pause by the pause detector 14, it is also possible that the media stream is directly provided to the pause detector 14.

As in voice communication natural pauses frequently occur, these pauses can be used to change the respective data path the media data packet is transmitted over. As it is known that continuous speech takes 0.4 to 1.2 seconds while silence typically lasts from 0.6 to 1.8 seconds, this knowledge can be used for the detection of voice communication pauses and to provide a change of the data path used for transferring the media data packet stream. The detection of the information pause is announced to the emitter controller 12 which chooses a data path preferably different from the previous data path for the transmission of the media data packet stream via the transmitting means 13.

In order to give the overlay network node 8 the information on the data path P1, P2, P3 over which the media data packet stream should be transmitted, either the respective data path information provided by the controller means 12 can be provided to the transmitting means 13 where the data path information is added to the respective packets of the media data packet stream, or can be provided directly to the overlay network node 8 wherein the respective data path indicated by the data path information is established.

It is preferred that the emitter controller 12 generates filler data packets which are provided to the transmitting means 13 of the first emitter device 3 and which are to be sent on the data paths different from the data paths used for the transmission of the media data packet stream and containing the data path information telling the second receiver device 6 on which data path the media data packets are currently arriving. The association between the information carried in the filler data packets and those in the media data packet stream is achieved using a sequence number. Path identification is achieved by a unit path identifier carried in the payload.

The second receiver device 6 is to receive the sent media data packet stream and to regenerate the media stream containing the voice information. The second receiver device 6 includes a receiving means 10 for receiving the data packet stream from each of the data paths via the overlay network node 8. Thus, the receiving means 10 receives filler data packets and media data packets substantially simultaneously. In order to identify which of the data packets contains the relevant media data, each of the received data packets is analysed in a controller 15.

If a filler data packet is analysed, the data path information contained in said filler data packet is recognized and all of the received data packets transmitted over the data path indicated by the data path information given in the filler data packets is transferred to the converter means 16, where the received media data packets are recombined to form the original media stream.

The receiver controller 15, when it receives the packet, can determine if it is a voice packet or a filler packet, e.g. by a unique path identification.

The emitter converter means 9 may contain an encryption unit in order to encrypt the media stream while transforming the media stream into a media data packet stream. Analogously, the receiver converter means 16 may include a decryption unit in order to decrypt the received media data packets while transforming the media data packets to the media stream.

The emitter controller 12 of the emitter device can choose the alternative data path depending on an information about the propagation delay of the data paths. The next data path is chosen such that the propagation delay of the data path is closest to that of the data path on which the media data packet stream has currently been transmitted. This provides knowledge on and/or a pre-measurement of the propagation delays of all data paths. Controlling the switching to the data path depending on the propagation delay is advantageous because jitter can be reduced.

The filler data packets are matched against the media data packets. If the filler data packets indicate that data packets, either media data or filler data, have been sent onto the data path and they are not received by the respective second receiver device 6, a path blocking information is generated and transmitted to the first transceiver device 1 to give the first transceiver device 1 the information that the respective data path should not be used for further transmission. If the interconnection between the first and second transceiver device 1, 2 is bi-directional, the respective path blocking information can be contained in the filler data packets provided by the second emitter device 5 of the second transceiver device 2.

Attackers controlling a part of the packet network can prevent the arrival of part of the data stream. Unless they control the entire network, they cannot prevent transfer of the whole stream. As any part of the data packet stream informs the receiver device on which part the media stream is being carried, emitter device and receiver device may identify the data paths which are being attacked and remove them from the list of the possible data paths.

By extension, multiple separate physical networks can be used with the same technique in which case the attacker needs to control all of the networks in order to prevent the communication. For example, a given emitter device may have access both to the fixed Ethernet connection to the Internet as well as a GPRS connection. In this case, both physical networks can be used in the transmission increasing the barrier of an attacker successfully denying service. Real-time encryption capabilities of the emitter device and the receiver device, desired level of security and bandwidth considerations may call for different variations of the schemes proposed.

If the emitter device and the receiver device both have a real-time encryption capacity to also encrypt the media stream, the level of security can be highly set. It allows the data path with the media data packet stream to be indistinguishable from the data paths carrying the filler data packets as long as the higher data rate of the data path carrying the media data does not give away such information. This means that the number of data paths has to carry the same throughput. Consequently, filler data packets with nearly the same size and data rate have to be generated and sent over the data paths not carrying the media data packet stream in parallel.

Bandwidth optimisation can be applied by sharing all or part of the data paths between different media data packet streams. In this case, filler data packets of different media data packet streams may be carried over the same data path which means that less filler data packets are required by the same media data packet stream.

For a less powerful attacker, for example an attacker that can only interfere with one data path at a time and that cannot quickly alter the data path it interferes on and with lower security requirements, a simpler solution may be adequate. It may then be sufficient to regularly switch data paths and it may not be necessary to encrypt even filler data packets between the emitter device and the receiver device. Thus, less filler data packets are needed causing less extra bandwidth.

As the transceiver devices 1, 2 are normally used in order to establish a bi-directional communication, the emitter and receiver devices are normally implemented in a network processor. Network processors can be enabled to encrypt and decrypt and/or encode and decode the media stream in order to receive respective media data packets and recombine the media data packets to the media stream, respectively. Furthermore, all logic functions as the pause detection and the decision if a received data packet is a filler data packet or a media data packet can be performed in the network processor. Furthermore, it can be provided that the transceiver devices 1, 2 are directly connected with different paths of the network 7, omitting the overlay network nodes 8.

## Claims

1. A method for transmitting media data, especially voice data, via a network (7),
wherein the media data are converted to a media data packet stream,
the network (7) having a number of data paths (P1, P2, P3) including a first and a second data path (P1, P2, P3) each capable of transmitting data packets of the media data packet stream, the method comprising the step of
- transmitting the media data packet stream via the first data path (P1, P2, P3),
- the method **characterised in that** it further comprises the steps of:
- analysing the media data packet stream to detect an information pause, and
- in response to the detected information pause stopping the media data packet stream transmitted via the first data path (P1, P2, P3)and continuing the transmission of the media data packet stream via the second data path (P1, P2, P3).

2. Method according to claim 1, wherein the information pause in the media data is detected if no information or no significant information is contained in the media data for a specific time period.

3. Method according to claim 1 or 2, further comprising generating a filler data packet stream which is transferred via the second data path (P1, P2, P3) when the media data packet stream is transferred via the first data path (P1, P2, P3) and which is transferred via the first data path (P1, P2, P3) when the media data packet stream is transferred via the second data path.

4. Method according to claim 3, wherein the filler data packet stream comprises path information indicating on which of the first and second data paths (P1, P2, P3) the media data packet stream is currently being transmitted.

5. Method according to claim 3 or 4, wherein the filler data packet stream is transmitted with a same data rate as the media data packet stream.

6. Method according to any one of claims 3 to 5, wherein the media data packets and/or the filler data packets are encrypted before being transmitted via the respective first or second data path (P1, P2, P3).

7. Method according to any one of claims 1 to 6, wherein one of the data paths (P1, P2, P3) is eliminated from the number of data paths (P1, P2, P3) of the network (7) if the transmission of the media data packets and/or of the filler data packets is intercepted or blocked.

8. An emitter device (3, 4) for transmitting provided media data, especially voice data, via a connected network,
said network (7) having a number of data paths (P1, P2, P3) each capable of carrying data packets of a data packet stream, the emitter device (3, 4) comprising:
- a converter means (9) for splitting the provided media data into media data packets in a media data packet stream;
- a transmitting means (13) for sending the media data packet stream via one of the data paths (P1, P2, P3);
- a controller for choosing one of the data paths (P1, P2, P3) for sending the media data packet stream,
- **characterised in that**, the emitter device further comprises a pause detector (14) to recognize an information pause in the media data, wherein the controller (12) is operable to switch the sending of the media data packet stream to another data path (P1, P2, P3) when an information pause is detected.

9. The emitter device (3, 4) according to claim 8 further comprising an encoding means to encode the media data packets.

10. The emitter device (3, 4) according to claim 8 or 9 further comprising a filler data generator for generating one or more filler data packets including a path information indicating on which of the data paths the media data packet stream is currently being transmitted, wherein the transmitting means is operable to transmit the one or more filler data packets via one or more data paths (P1, P2, P3) which are different from the one data path (P1, P2, P3) the media data packet stream is transmitted over.

11. The emitter device (3, 4) according to claim 10, wherein the controller is operable to eliminate a respective data path from the number of data paths (P1, P2, P3) if the transmission of the media data packets and/or of the filler data packets via the respective data path (P1, P2, P3) is intercepted or blocked.

12. The emitter device (3, 4) according to any one of claims 8 to 11, wherein the controller is operable to choose the next data paths depending on the propagation delay of the data paths, wherein the next data paths having a propagation delay closest to the propagation delay of the current data path.

13. A transceiver device including an emitter device (3, 5) according to any one of claims 8 to 12.

14. A computer program product comprising a computer usable medium having embodied therein computer readable program code means for causing a processor of a computer device to perform the method according to any of claims 1 to 7.

## Patentansprüche

1. verfahren zum Übertragen von Mediendaten, insbesondere von Sprachdaten, über ein Netzwerk (7),
bei dem die Mediendaten in einen Mediendatenpaketstrom konvertiert werden,
das Netzwerk (7) eine Anzahl von Datenpfaden (P1, P2, P3) einschließlich eines ersten und eines zweiten Datenpfads (P1, P2, P3) aufweist, über die jeweils Datenpakete des Mediendatenpaketstroms übertragen werden können, wobei das Verfahren den Schritt umfasst
- der Übertragung des Mediendatenpaketstroms über den ersten Datenpfad (P1, P2, P3),
- wobei das Verfahren **dadurch gekennzeichnet ist, dass** es ferner folgende Schritte umfasst:
- Analysieren des Mediendatenpaketstroms zum Erkennen einer Informationspause und
- als Reaktion auf die erkannte Informationspause Stoppen des über den ersten Pfad (P1, P2, P3) übertragenen Mediendatenpaketstroms und Fortführen der Übertragung des Mediendatenpaketstroms über den zweiten Datenpfad (P1, P2, P3) .

2. Verfahren nach Anspruch 1, bei dem die Informationspause in den Mediendaten erkannt wird, wenn über einen bestimmten Zeitraum keine Informationen bzw. keine bedeutsamen Informationen in den Mediendaten enthalten sind.

3. Verfahren nach Anspruch 1 oder 2, das ferner das Generieren eines Fülldatenpaketstroms umfasst, der über den zweiten Datenpfad (P1, P2, P3) übermittelt wird, wenn der Mediendatenpaketstrom über den ersten Datenpfad (P1, P2, P3) übermittelt wird, und der über den ersten Datenpfad (P1, P2, P3) übermittelt wird, wenn der Mediendatenpaketstrom über den zweiten Datenpfad übermittelt wird.

4. Verfahren nach Anspruch 3, bei dem der Fülldatenpaketstrom Pfadinformationen umfasst, die angeben, über welchen der ersten und zweiten Datenpfade (P1, P2, P3) der Mediendatenpaketstrom aktuell gesendet wird.

5. Verfahren nach Anspruch 3 oder 4, bei dem der Fülldatenpaketstrom mit derselben Übertragungsgeschwindigkeit wie der Mediendatenpaketstrom übertragen wird.

6. Verfahren nach einem der Ansprüche 3 bis 5, bei dem die Mediendatenpakete und/oder die Fülldatenpakete verschlüsselt werden, bevor sie über den entsprechenden ersten oder zweiten Datenpfad (P1, P2, P3) übertragen werden.

7. Verfahren nach einem der Ansprüche 1 bis 6, bei dem einer der Datenpfade (P1, P2, P3) aus der Anzahl der Datenpfade (P1, P2, P3) des Netzwerks (7) beseitigt wird, wenn die Übertragung der Mediendatenpakete und/oder der Fülldatenpakete abgefangen oder blockiert wird.

8. Emitter (3, 4) zum Übertragen bereitgestellter Mediendaten, insbesondere Sprachdaten, über ein angeschlossenes Netzwerk, wobei das Netzwerk (7) eine Anzahl von Datenpfaden (P1, P2, P3) aufweist, die jeweils Datenpakete eines Datenpaketstroms transportieren können, und der Emitter (3, 4) Folgendes umfasst:
- Umsetzermittel (9)zum Aufteilen der bereitgestellten Mediendaten in Mediendatenpakete in einem Mediendatenpaketstrom;
- Übertragungsmittel (13) zum Senden des Mediendatenpaketstroms über einen der Datenpfade (P1, P2, P3);
- einen Controller (12) zum Auswählen eines der Datenpfade zum Senden des Mediendatenpaketstroms,
- **dadurch gekennzeichnet, dass** der Emitter ferner einen Pausendetektor (14) zum Erkennen einer Informationspause in den Mediendaten umfasst, wobei der Controller (12) so betrieben werden kann, dass er das Senden des Mediendatenpaketstroms auf einen anderen Datenpfad (P1, P2, P3) umschaltet, wenn eine Informationspause erkannt wird.

9. Emitter (3, 4) nach Anspruch 8, der ferner Codierungsmittel zum Codieren der Mediendatenpakete umfasst.

10. Emitter (3, 4) nach Anspruch 8 oder 9, der ferner einen Fülldatengenerator zum Generieren eines oder mehrerer Fülldatenpakete umfasst, die Pfadinformationen enthalten, die angeben, über welchen der Datenpfade der Mediendatenpaketstrom aktuell gesendet wird, wobei die Übertragungsmittel so betrieben werden können, dass sie das bzw. die Fülldatenpakete über einen oder mehrere Datenpfade (P1, P2, P3) übertragen können, der bzw. die sich von dem einen Datenpfad (P1, P2, P3) unterscheiden, über den der Mediendatenpaketstrom gesendet wird.

11. Emitter (3, 4) nach Anspruch 10, wobei der Controller so betrieben werden kann, dass er einen entsprechenden Datenpfad aus der Anzahl der Datenpfade (P1, P2, P3) beseitigen kann, wenn die Übertragung der Mediendatenpakete und/oder der Fülldatenpakete über den entsprechenden Datenpfad (P1, P2, P3) abgefangen oder blockiert wird.

12. Emitter (3, 4) nach einem der Ansprüche 8 bis 11, wobei der Controller so betrieben werden kann, dass er die nächsten Datenpfade abhängig von der Laufzeitverzögerung der Datenpfade auswählen kann, wobei die nächsten Datenpfade eine Laufzeitverzögerung aufweisen, die der Laufzeitverzögerung des aktuellen Datenpfads am ehesten entspricht.

13. Transceiver mit einem Emitter (3, 5) nach einem der Ansprüche 8 bis 12.

14. Computerprogrammprodukt, das ein von einem Computer verwendbares Medium umfasst, in das computerlesbare Programmcodierungsmittel integriert sind, damit ein Prozessor eines Computers das verfahren gemäß einem der Ansprüche 1 bis 7 ausführen kann.

## Revendications

1. Un procédé pour transmettre des données média, spécialement des données voix, via un réseau (7)
dans lequel les données média sont converties en un flux de paquets de données média,
le réseau (7) comprenant une pluralité de chemins de données (P1, P2, P3), incluant un premier et un deuxième chemins de données (P1, P2, P3), capables chacun de transmettre des paquets de données du flux de paquets de données média, le procédé comprenant l'étape consistant à :
- transmettre le flux de paquets de données média, via le premier chemin de données (P1, P2, P3),
- le procédé tant **caractérisé en ce qu'**il comprend en outre les étapes consistant à :
- analyser le flux de paquets de données média afin de détecter une pause d'information, et
- en réponse à la détection de la pause d'information stopper le flux de paquet de données média transmis via le premier chemin de données (P1, P2, P3) et continuer la transmission du flux de paquets de données média via le deuxième chemin de données (P1, P2, P3).

2. Procédé selon la revendication 1, dans lequel la pause d'information dans les données média est détectée si aucune information ou aucune information significative n'est contenue dans les données média pendant une période de temps spécifique.

3. Procédé selon la revendication 1 ou 2, comprenant en outre la génération d'un flux de paquets de données de remplissage, transféré via le deuxième chemin de données (P1, P2, P3) lorsque le flux de paquets de données média est transféré via le premier chemin de données (P1, P2, P3), et transféré via le premier chemin de données (P1, P2, P3) lorsque le flux de paquets de données média est transféré via le deuxième chemin de données.

4. Procédé selon la revendication 3, dans lequel le flux de paquets de données de remplissage comprend une information de chemin, indiquant sur lequel des premier et deuxième chemins de données (P1, P2, P3) le flux de paquets de données média est actuellement en cours de transmission.

5. Procédé selon la revendication 3 ou 4, dans lequel le flux de paquets de données de remplissage est transmis avec une même cadence de données que le flux de paquets de données média.

6. Procédé selon l'une quelconque des revendications 3 à 5, dans lequel les paquets de données média et/ou les paquets de données de remplissage sont chiffrés avant d'être transmis via le premier ou deuxième chemin de données (P1, P2, P3) respectif.

7. Procédé selon l'une quelconque des revendications 1 à 6, dans lequel l'un des chemins de données (P1, P2, P3) est éliminé du nombre des chemins de données (P1, P2, P3) du réseau (7), si la transmission des paquets de données média et/ou des paquets de données de remplissage est interceptée ou bloquée.

8. Un dispositif émetteur (3, 4) pour transmettre des données média fournies, spécialement des données voix, via un réseau connecté, ledit réseau (7) comprenant une pluralité de chemins de données (P1, P2, P3), capables chacun de transporter des paquets de données d'un flux de paquets de données, le dispositif émetteur (3, 4) comprenant :
- des moyens convertisseur (9), pour diviser les données média fournies en des paquets de données média dans un flux de paquets de données média,
- des moyens de transmission (13), pour envoyer le flux de paquets de données média via l'un des chemins de données (P1, P2, P3),
- un contrôleur, pour choisir l'un des chemins de données (P1, P2, P3) pour envoyer le flux de paquets de données média,
- **caractérisé en ce que** le dispositif émetteur comprend en outre un détecteur de pause (14) pour identifier une pause d'information dans les données média, dans lequel le contrôleur (12) est susceptible de fonctionner pour commuter l'envoi du flux de paquets de données média à un autre chemin de données (P1, P2, P3) lorsqu'une pause d'information est détectée.

9. Le dispositif émetteur (3, 4) selon la revendication 8, comprenant en outre un moyen de codage pour coder les paquets de données média.

10. Le dispositif émetteur (3, 4) selon la revendication 8 ou 9, comprenant en outre un générateur de données de remplissage pour générer un ou plusieurs paquets de données de remplissage incluant une information de chemin indiquant sur lequel des chemins de données le flux de paquets de données média est actuellement en cours de transmission, dans lequel les moyens de transmission sont susceptibles de fonctionner pour transmettre les uns ou plusieurs paquets de données de remplissage, via un ou plusieurs chemins de données (P1, P2, P3) qui sont différents du chemin de données (P1, P2, P3) sur lequel le flux de paquets de données média est transmis.

11. Le dispositif émetteur (3, 4) selon la revendication 10, dans lequel le contrôleur est susceptible de fonctionner pour éliminer un chemin de données respectif du nombre des chemins de données (P1., P2, P3), si la transmission des paquets de données média et/ou des paquets de données de remplissage, via le chemin de données (P1, P2, P3) respectif, est interceptée ou bloquée.

12. Le dispositif émetteur (3, 4) selon l'une quelconque des revendications 8 à 11, dans lequel le contrôleur est susceptible de fonctionner pour choisir les chemins de données suivants selon le délai de propagation des chemins de données, dans lequel les chemins de données suivants ont un délai de propagation le plus proche du délai de propagation du chemin de données actuel.

13. Un dispositif émetteur-récepteur, comprenant un dispositif émetteur (3, 5) selon l'une quelconque des revendications 8 à 12.

14. Un produit de programme pour ordinateur, comprenant un support utilisable par ordinateur, dans lequel sont incorporés des moyens de code de programme lisible par ordinateur, pour qu'un processeur d'un dispositif ordinateur mette en oeuvre le procédé selon l'une quelconque des revendications 1 à 7.
